(19) **Europäisches Patentamt / European Patent Office / Office européen des brevets**

(11) **EP 2 462 498 B1**

(12) # FASCICULE DE BREVET EUROPEEN

(45) Date de publication et mention de la délivrance du brevet:
**05.05.2021 Bulletin 2021/18**

(21) Numéro de dépôt: **10762731.7**

(22) Date de dépôt: **06.08.2010**

(51) Int Cl.:
*G06F 3/044* (2006.01)　　*G06F 3/041* (2006.01)

(86) Numéro de dépôt international:
**PCT/FR2010/051668**

(87) Numéro de publication internationale:
**WO 2011/015794 (10.02.2011 Gazette 2011/06)**

(54) **DISPOSITIF ET PROCEDE D'INTERFACE DE COMMANDE SENSIBLE A UN MOUVEMENT D'UN CORPS OU D'UN OBJET ET EQUIPEMENT DE COMMANDE INTEGRANT CE DISPOSITIF**

VORRICHTUNG UND VERFAHREN ZUR STEUERUNG EINER AUF DIE BEWEGUNG EINES KÖRPERS ODER OBJEKTS REAGIERENDEN SCHNITTSTELLE UND STEUERGERÄT MIT DIESER VORRICHTUNG

DEVICE AND METHOD FOR CONTROL INTERFACE SENSITIVE TO A MOVEMENT OF A BODY OR OF AN OBJECT AND CONTROL EQUIPMENT INTEGRATING THIS DEVICE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(30) Priorité: **07.08.2009 FR 0955583**

(43) Date de publication de la demande:
**13.06.2012 Bulletin 2012/24**

(60) Demande divisionnaire:
**14179174.9 / 2 849 040**

(73) Titulaire: **QuickStep Technologies LLC Wilmington, DE 19801 (US)**

(72) Inventeur: **ROZIERE, Didier F-30900 Nîmes (FR)**

(74) Mandataire: **Lang, Johannes et al Bardehle Pagenberg Partnerschaft mbB Patentanwälte, Rechtsanwälte Prinzregentenplatz 7 81675 München (DE)**

(56) Documents cités:
| | |
|---|---|
| FR-A1- 2 756 048 | FR-A1- 2 844 349 |
| FR-A1- 2 896 595 | US-A1- 2006 097 991 |
| US-A1- 2009 009 485 | US-B2- 6 847 354 |

## Description

## Domaine technique

La présente invention concerne un dispositif d'interface de commande, notamment gestuelle et/ou tactile possiblement combinée à une commande vocale, sensible à un mouvement d'un corps ou d'un objet ou de la voix. Elle vise également un procédé d'interface de commande mis en œuvre dans ce dispositif, ainsi qu'un équipement de commande mettant en œuvre un tel dispositif.

Le domaine de l'invention est plus particulièrement, mais de manière non limitative, celui des interfaces homme-machine, gestuelles et/ou tactiles, et possiblement vocale permettant en temps réel d'interpréter des mouvements du corps, de la main, du doigt ou d'un objet, à grande distance jusqu'au toucher, ces mouvements étant combinés ou non à une requête vocale afin d'exécuter une ou des commandes.

## Etat de la technique antérieure

Les interfaces hommes-machines dites virtuelles, c'est à dire gestuelles et/ou tactiles et vocale, par opposition aux interfaces ou l'utilisateur agit sur des capteurs mécaniques tels que des touches de clavier ou des commutateurs, sont le plus souvent des cameras 3D lorsqu'il s'agit d'interface gestuelle et des surfaces actives, souvent transparentes et intégrées sur des écrans d'affichage lorsqu'il s'agit d'interface tactile. Ces interfaces tactiles sont largement répandues sous le nom de « touchpad » pour de multiples applications industrielles et grand public, comme par exemple sur les smartphones, en domotique ou les interfaces de jeux.

L'écran permet d'afficher par exemple un clavier ou l'interface d'un logiciel dont l'image évolue en réponse aux actions de l'utilisateur, qui consistent en général en un déplacement, un tapotement ou encore un contact prolongé du doigt ou d'un stylet sur la surface de l'écran afin d'exécuter des commandes. Plus récemment se sont développées les interfaces dites gestuelles pour répondre à la complexité de plus en plus grande des produits numériques issus de la convergence des technologies de l'information de la communication et du divertissement. Ces interfaces sont le plus souvent à base d'une camera 3D et d'un traitement d'image capable d'interpréter à grande distance, jusqu'à 5 mètres, les mouvements du corps ou de la main pour interagir avec l'écran.

Parmi les commandes virtuelles il faut aussi citer la commande vocale qui permet l'exécution d'une requête à partir de la voix
Parmi les technologies tactiles existantes, les technologies capacitives sont fréquemment utilisées car :

- elles ne nécessitent pas d'exercer une action mécanique sur la surface de l'écran contrairement à des techniques résistives par exemples,

- elles se prêtent bien au maillage de la surface de l'écran par un réseau de capteurs directement intégré à la surface de ce dernier, ce qui permet une intégration bien plus compacte et robuste qu'avec des techniques optiques par exemple qui nécessitent un réseau d'émetteurs-récepteurs surélevés par rapport à la surface de détection.

De plus en plus, on recherche dans les interfaces virtuelles une fonction de détection de proximité, qui permet de créer de nouveaux modes d'interaction homme-machine sans aucun contact. Les capteurs doivent alors être en mesure de détecter des déplacements ou des formes à plusieurs centimètres, de manière suffisamment précise et résolue pour pouvoir les transformer en commandes.

Si les technologies optiques sont incontournables quand il s'agit de détecter précisément les mouvements à très grande distance (au delà de 40 centimètres), les technologies capacitives s'avèrent très bien adaptées pour les interfaces sans contact de proximité, notamment parce que l'ensemble des capteurs peut être intégré à une surface active non plane, par exemple un écran, sans zone morte ou sans nécessiter de dispositifs externes (caméras).

Parmi les interfaces tactiles capacitives, les techniques les plus utilisées sont en général basées sur le principe du transfert de charges. Elles permettent d'obtenir une sensibilité de l'ordre du picofarad mais ne sont pas adaptées pour réaliser une interface gestuelle. En effet, leur sensibilité ne permet pas de détecter l'approche d'un doigt car la capacité générée ne dépasse alors pas quelques centièmes de picofarads. Les capacités parasites présentes dans ce type de capteur et dans l'électronique empêchent toute amélioration de la sensibilité.

De plus, ces techniques sont très sensibles aux perturbations électromagnétiques, aux charges électriques parasites et à la conduction électrique du diélectrique recouvrant les électrodes. Lorsque l'humidité relative de l'air est supérieure à 60%, la plupart des diélectriques deviennent légèrement conducteurs d'électricité et les charges générées par l'électronique sont modifiées, ce qui perturbe la mesure capacitive.

Parmi les solutions techniques employées pour réaliser des interfaces non tactiles capacitives, on en connait qui mettent en œuvre une pseudo-garde permettant de réduire fortement les capacités parasites dans le capteur et l'électronique. Ces techniques permettent toutefois de ne gagner au mieux qu'un ordre de grandeur sur la sensibilité, ce qui permet de détecter la présence d'un doigt à seulement quelques mm de la surface sensible du capteur.

En ce qui concerne les interfaces gestuelles capacitives, On connait le document US 6,847,354 par Vranish, dans lequel des capteurs capacitifs avec garde active sont mis en œuvre. Cette garde active est créée à l'aide d'un amplificateur de gain unitaire qui génère dans la garde une tension d'une amplitude identique à celle de l'électrode de mesure.

L'inconvénient de cette méthode est que l'électronique génère par principe physique des capacités parasites qui correspondent à la somme des capacités d'entrée de l'amplificateur pour générer la garde active, appelée aussi pseudo garde, et du circuit pour exciter l'électrode de mesure. Ces capacités parasites atteignent facilement le picofarad et se rajoutent à la capacité à mesurer, qui peut ne représenter que le centième de cette valeur totale.

De plus, la mesure de la capacité n'est pas directe car l'électronique de Vranish obtient l'image de la capacité à mesurer en mesurant son courant via une résistance de référence. Cette résistance génère un déphasage parasite du courant électrique qui dégrade fortement la qualité de détection ou de démodulation du signal représentant la capacité à mesurer. Un autre inconvénient est le niveau de diaphonie entre les différentes électrodes. En effet, chaque électrode est excitée par un amplificateur opérationnel dont le gain est approximativement unitaire. Le moindre écart de gain entre les différents amplificateurs provoque une importante capacité parasite supplémentaire.

Ces inconvénients ne permettent pas de détecter et de repérer la position d'un objet comme un doigt ou une main à plusieurs centimètres voire dizaines de centimètres avec chaque capteur.

Par ailleurs, les technologies capacitives mises en œuvre pour la réalisation d'interfaces gestuelles ont été développées le plus souvent dans le but d'être intégrées à des écrans ou du moins des surfaces sensiblement planes. Les structures de capteurs sont matricielles, comme dans US 6,847,354, et interfacées par des structures d'électrodes disposées selon une grille X-Y. Ces technologies se prêtent difficilement à l'instrumentation de surfaces de formes plus complexes.

En particulier, elles sont difficilement applicables à des dispositifs de commandes virtuelles ou des interfaces gestuelles basés non pas sur une surface plane instrumentée mais sur d'autres types de géométries incluant des cavités, des reliefs, des ondulations simulant par exemple des touches, des boutons ou enveloppant l'utilisateur dans lesquels des capteurs peuvent être disposés selon des géométries diverses, parfois sous des matériaux diélectriques d'épaisseur importante, et doivent parfois pouvoir être disposés et gérés indépendamment les uns des autres.

On connaît le document FR 2,884,349 par Rozière, qui divulgue un système basé sur des capteurs capacitifs comportant une seule électrode de mesure. Le dispositif permet de détecter des objets au delà de 10 cm avec chaque électrode, grâce à une électronique à pont flottant. Les mesures des électrodes sont lues séquentiellement au moyen d'un système de scrutation.

Toutefois, ce dispositif, destiné à équiper des parois d'instruments mobiles, est spécifiquement conçu pour couvrir les applications d'anticollision, et ne couvre pas les applications d'interface gestuelle.

Si les interfaces gestuelles sont amenées à prendre une grande importance, le toucher demeure toutefois très important, même dans les interfaces virtuelles capables de détecter les mouvements à distance, pour des raisons notamment psychologiques et de sécurité. En effet, d'une part la sensation tactile contribue au confort de l'utilisateur, d'autre part le toucher permet une validation des ordres efficace dans des contextes d'utilisation où la sécurité est importante (équipements médicaux, véhicules).

Le but de la présente invention est de proposer une interface gestuelle et une interface gestuelle et tactile, composées d'un dispositif et un procédé pour le contrôle d'actions et la saisie de commandes, qui soit compact et intégrable dans une grande variété d'environnements, tout en permettant :

- d'anticiper des actions par des mesures précises de déplacements sans contact, et
- de valider de manière sécurisée des ordres par détection d'actions physiques sur une surface. *

US 2006/097991 A1 divulgue un écran tactile multipoint.

US 2009/009485 A1 divulgue une garde commandée pour des pavés tactiles capacitifs.

## Exposé de l'invention

L'Objectif précité est atteint par l'invention définie dans les revendications indépendantes; des modifications de l'invention sont définies dans les revendications dépendantes.

Cet objectif est atteint avec un dispositif d'interface de commande sensible à un mouvement d'un corps ou d'un objet, comprenant :

- une surface de détection,
- au moins un capteur capacitif, lequel ou lesquels capteur(s) comprenant chacun une électrode de mesure comportant une surface active orientée vers la surface de détection, ou sensiblement confondue avec ladite surface de détection,
- une garde en matériau conducteur à l'électricité disposée à proximité des électrodes de mesure au moins selon leur face sensiblement opposée à la surface active, laquelle garde étant excitée à un potentiel électrique alternatif sensiblement identique à celui des électrodes de mesure,
- des moyens électroniques pour exciter les électrodes de mesure et traiter les signaux issus desdits capteurs capacitifs, de façon à fournir une information de distance entre la surface active des électrodes et ledit objet.

Suivant l'invention,

- les surfaces actives des électrodes de mesure sont indépendantes les unes des autres, et
- les moyens électroniques d'excitation et de traitement sont en outre agencés pour interroger lesdites électrodes de mesure indépendamment les unes des autres.

Avantageusement, les moyens électroniques d'excitation et de traitement peuvent présenter une étendue de mesure permettant à la fois

- de détecter et identifier un mouvement relatif du corps ou de l'objet par rapport à la surface active des électrodes de mesure, et
- de détecter un contact dudit corps ou dudit objet avec la surface de détection.

L'espace de détection est défini comme la portion de l'espace dans laquelle les capteurs capacitifs sont aptes à détecter un objet et en mesurer la distance.

Les objets détectables avec un dispositif selon l'invention sont des objets détectables de manière capacitive, c'est-à-dire sensiblement conducteurs d'électricité et aptes à constituer une masse électrique. Ces objets ne sont pas nécessairement reliés à la masse par une connexion électrique, mais ils peuvent l'être naturellement par couplage capacitif. On peut citer, à titre d'exemples non limitatifs, un être vivant, une main, un doigt, ou un stylet en matériau conducteur tenu à la main.

Le dispositif selon l'invention permet de mesurer à chaque instant la forme de la surface du corps ou de l'objet relativement à la position des capteurs capacitifs. La détection du mouvement d'un objet ou d'un corps peut ainsi inclure, de manière non limitative, sa position dans l'espace, sa trajectoire, et l'analyse de sa forme à des fins d'identification par exemple.

Avantageusement, les moyens électroniques d'excitation et de traitement peuvent au moins pour partie être référencés au potentiel électrique de la garde.

Cette configuration de l'électronique, en pont flottant, permet de supprimer les capacités parasites. Ainsi, les capacités mesurées par chaque capteur sont directement celles créées entre l'objet visé et les électrodes. La sensibilité du dispositif est optimisée et permet une mesure à grande distance très résolue. De plus, les capteurs capacitifs et l'électronique associée peuvent alors être optimisés pour atteindre une étendue de mesure, ou dynamique, importante. En effet, la gamme de capacités à mesurer avec chaque électrode peut s'étendre de moins d'un millième de picofarad à plusieurs picofarads, soit une dynamique en termes de capacités supérieure à 1000. Cette dynamique permet de détecter, avec sensiblement la même résolution latérale liée à la taille de l'électrode, la présence ou la position d'un objet lointain comme un doigt à plus de 5 cm de distance ainsi que le contact et la pression de ce doigt par exemple sur un diélectrique recouvrant l'électrode de mesure. De cette manière, le dispositif selon l'invention permet à la fois d'anticiper des actions par identification de l'objet qui approche ou de son mode d'approche, et de valider des commandes par détection du contact.

Suivant un autre aspect avantageux du dispositif selon l'invention, chaque capteur capacitif comprend une seule électrode de mesure qui est indépendante des électrodes des autres capteurs. Il est ainsi possible de disposer les électrodes selon des géométries et des formes de surfaces très variées. Ce caractère indépendant des électrodes est un aspect particulièrement avantageux du dispositif selon l'invention pour la réalisation d'interfaces gestuelles basées sur des structures de formes quelconques, et en ce sens, il diffère des interfaces gestuelles de l'art antérieur basées sur des structures matricielles de capteurs disposées sur des surfaces planes ou des écrans.

Suivant des modes de réalisation particuliers, les moyens électroniques d'excitation et de traitement peuvent comprendre des moyens de scrutation permettant de lire séquentiellement les signaux de mesure issus des capteurs capacitifs. Les électrodes qui ne sont pas en cours de scrutation peuvent avantageusement être reliées au potentiel de la garde.

Dans ce mode de réalisation, les électrodes sont sélectionnées séquentiellement afin de limiter le nombre de composants et la consommation d'énergie. Le fait de relier au potentiel de garde les électrodes qui ne sont pas en cours de scrutation permet de réduire au maximum les effets de bord électrostatique de l'électrode mesurante.

Suivant d'autres modes de réalisation nécessitant plus de composants, chaque électrode peut être reliée à un circuit électronique comme par exemple un amplificateur de charge. Ces circuits électroniques sont référencés au potentiel électrique flottant, donc à celui de la garde, ce qui permet de conserver la propriété avantageuse que chaque électrode est vue comme une garde pour ses voisines. Cette solution permet d'augmenter la vitesse de mesure car les capacités ou distances peuvent être mesurées en parallèle sur toutes les électrodes.

Il est bien entendu possible de mettre en œuvre d'autres modes de scrutation des électrodes, tel que par exemple une lecture par groupe.

Suivant des modes de réalisation particuliers, les moyens électroniques d'excitation et de traitement peuvent comprendre des moyens permettant de regrouper électriquement des électrodes de mesure, de telle sorte que lesdites électrodes regroupées constituent une électrode de mesure unique.

Il est ainsi possible de créer des électrodes de surface supérieure, permettant d'augmenter l'étendue de mesure pour détecter des objets à une plus grande distance. La configuration des groupements d'électrodes peut bien entendu être effectuée électroniquement, et être contrôlée par les moyens de calcul. Les électrodes de mesure peuvent par exemple être regroupées lorsque l'objet est loin du panneau afin de privilégier la portée de mesure, et dégroupées lorsque l'objet est proche des électrodes afin de favoriser la résolution spatiale et la précision de la position en trois dimensions de l'objet.

Avantageusement,

- la surface des électrodes peut être calculée de telle sorte que chaque capteur capacitif puisse mesurer la distance entre la surface active de l'électrode et un doigt jusqu'à une distance d'au moins 3 cm, ou, suivant les applications, 5 cm ;
- les électrodes de mesures peuvent être réalisées sur un support de type circuit imprimé souple. Ainsi, elles peuvent être réalisées selon des techniques de réalisation de circuits électroniques classiques, et être disposées selon des surfaces ou des ensembles de surfaces qui ne sont pas nécessairement plans,
- les électrodes de mesures peuvent également être réalisées sur un support de type circuit imprimé rigide,
- les moyens électroniques d'excitation et de traitement référencés au potentiel de la garde peuvent être fixés sur le même support que les électrodes.

Le fait qu'une partie de l'électronique soit référencée au potentiel de la garde permet avantageusement de la placer à proximité des électrodes sans risquer de perturber leur fonctionnement, et améliore ainsi les conditions d'intégration du dispositif. En effet, si ces circuits électriques étaient référencés par exemple au potentiel de masse extérieur (potentiel proche de celui de l'objet ou du doigt), les lignes de champ des électrodes seraient très rapidement absorbées par ces circuits et la portée du dispositif ne permettrait pas de réaliser une détection sans contact. C'est un problème majeur rencontré dans beaucoup de dispositifs de l'art antérieur.

Avantageusement, la partie de l'électronique référencée à la garde peut communiquer avec des systèmes extérieurs en utilisant la masse de référence de ces systèmes extérieurs. La liaison et le découplage entre l'électronique capacitive et l'extérieur peuvent par exemple être réalisés au moyen d'optocoupleurs ou de selfs (inductances) de choc. L'alimentation de la partie flottante référencée à la garde peut être réalisée avec un convertisseur DC-DC ou des selfs de choc.

Suivant un autre aspect de l'invention, le dispositif peut comprendre en outre un matériau diélectrique disposé du côté de la surface active des électrodes de mesure. Dans ce cas, la surface dudit matériau diélectrique opposée aux électrodes constitue la surface de détection.

Avantageusement,

- le matériau diélectrique peut être disposé de telle sorte à être sensiblement en contact avec la surface active des électrodes,
- le matériau diélectrique peut comprendre un matériau souple permettant à la surface de détection de se déformer sensiblement en direction des électrodes de mesure par amincissement local du matériau sous l'action d'une force d'appui.

Le fait d'utiliser un matériau souple permet avantageusement de détecter la pression exercée sur la surface par mesure du déplacement de l'objet en deçà de la position de la surface de détection au repos.

Suivant un autre mode de réalisation, le matériau diélectrique peut comprendre une plaque sensiblement rigide, apte à se déplacer vers des électrodes de mesure sous l'action d'une force d'appui, selon une inclinaison dépendant du point d'application de ladite force d'appui.

La plaque peut être pourvue d'électrodes détectables de manière capacitive sur au moins une partie de sa surface, de telle sorte à pouvoir en mesurer le déplacement ou la déformation au moyen d'électrodes capacitives judicieusement placées. Cette plaque peut être par exemple un clavier soumis à la pression d'un objet ou d'un doigt. Avec au moins deux électrodes capacitives disposées vis-à-vis d'électrodes de la plaque et mesurant la distance à ces électrodes, il est possible de mesurer l'inclinaison du clavier et d'estimer la zone approximative où le doigt appuie.

Suivant une autre configuration, un ensemble, par exemple un clavier, comprenant une plaque diélectrique recouvrant de premières électrodes de mesure, peut être apte à se déplacer globalement sous l'effet de la pression vers de secondes électrodes de mesures, qui mesurent cette pression.

Avantageusement, ces secondes électrodes peuvent être de sensibilité optimisée pour les faibles déplacements.

Avantageusement,

- le matériau diélectrique peut être sélectionné de telle sorte à présenter une texture agréable au toucher,
- la surface de détection peut présenter des formes en relief matérialisant des commandes.

La surface de détection peut être plane, mais aussi d'une forme quelconque permettant une intégration optimale en termes d'esthétique et d'ergonomie notamment. Elle peut être, par exemple et de manière non limitative, de forme sphérique ou hémisphérique pour imiter une souris d'ordinateur ou une partie d'un tableau de commande d'une machine médicale.

Un dispositif selon l'invention peut être intégré selon une grande variété de configurations, par exemple à un accoudoir de fauteuil pour personnes handicapées, ou au tableau de bord d'un véhicule. Il permet en particulier de remplacer des boutons électromécaniques de commande, pour des raisons de fiabilité par exemple.

Sans perte de généralité, on peut assimiler la surface de détection à un panneau de commande. De préférence, les électrodes de mesure sont juxtaposées les unes aux autres afin d'éviter des zone mortes, dans lesquelles les objets ne sont pas détectés, sur le panneau. On peut aussi créer volontairement des zones mortes dans lesquelles l'électrode est remplacée par une garde ou une masse, ce qui permet de dévier les lignes de champ des électrodes voisines pour en réduire la portée ou les modifier.

Afin d'obtenir un bon compromis entre la résolution latérale et la portée de détection de l'objet, il est avantageux de choisir une taille d'électrodes sensiblement du même ordre de grandeur que celle de l'objet. Par exemple pour optimiser la détection d'un doigt, il est avantageux de choisir une surface d'électrode de l'ordre de 1 cm$^2$ à 2 cm$^2$.

La forme des électrodes peut être adaptée en fonction des caractéristiques de détection recherchées, et plusieurs formes d'électrodes peuvent exister dans un même dispositif. Par exemple, il est possible de disposer des électrodes de forme particulière, par exemple rectangulaire, sur les bords d'un panneau de commande pour détecter de quel côté s'approche un doigt ou une main. Cela peut permettre par exemple au dispositif de sélectionner les actions autorisées pour une personne, selon le côté par lequel elle aborde le panneau.

Un dispositif selon l'invention peut fournir comme données de sorties, de manière non limitative, soit des signaux de mesure analogiques, soit des signaux sous forme numérique, soit directement les distances séparant les électrodes de l'objet ou soit directement, par exemple, la position en trois dimensions, l'analyse des mouvements de l'objet, l'identification de l'objet ou des ordres de commande.

Pour une détection en trois dimensions, chaque électrode du dispositif peut être considérée comme un pixel et la résolution spatiale physique est limitée par la surface des électrodes. Cette résolution spatiale peut être sensiblement améliorée au moyen de méthodes de calcul numérique d'interpolation. Une méthode consiste par exemple à calculer le centre de gravité de l'objet « vu » par l'ensemble des électrodes. Ce centre théorique devient un point virtuel qui peut être visualisé sur un écran. Cela permet par exemple d'écrire, de dessiner ou d'agir avec précision sur une surface réduite représentée sur un écran avec un objet tel qu'un doigt ou une main.

La détection tridimensionnelle permet aussi d'utiliser le dispositif comme une camera capacitive. En effet le système permet de mesurer en temps réel la distance absolue séparant chaque électrode de l'objet visé et, avec un nombre suffisant d'électrodes, il est possible d'imager ou de reconnaître cet objet.

Le dispositif selon l'invention a également pour objet de détecter le contact de l'objet (ou le doigt) avec la surface de détection (ou le panneau de commande) de manière suffisamment certaine pour garantir la sûreté de fonctionnement recherchée. Pour cela, connaissant la position de la surface de détection par exemple par calibrage, il est possible de déterminer le contact directement à partir de la mesure de distance de l'objet, lorsqu'on détecte que l'objet est à une distance correspondant à celle de la surface.

Suivant un mode de réalisation avantageux selon lequel la surface de détection est constituée par un matériau diélectrique en contact avec la surface des électrodes, il est possible de détecter le contact de manière plus sûre à partir de l'analyse de la capacité entre l'objet et l'électrode. En effet, lorsqu'un doigt par exemple entre en contact avec la surface du diélectrique, il n'y a pratiquement plus d'air sur le trajet des lignes de champ électrique entre le doigt et l'électrode. Or le matériau diélectrique a une permittivité diélectrique supérieure à celle de l'air, de l'ordre par exemple de $\varepsilon_r = 3$. En conséquence, la capacité entre le doigt et l'électrode est sensiblement plus élevée lorsque le doigt est en contact avec la surface, comparé au cas où il subsiste une mince lame d'air, ce qui permet de détecter le contact de manière plus sûre.

Il est également possible, dans un dispositif selon l'invention, que les électrodes ne soient pas recouvertes de matériau diélectrique. Dans ce cas, le contact entre l'objet et une électrode peut être détecté du fait que l'électrode est mise au potentiel électrique de masse de l'objet lors du contact.

La pression peut avantageusement être mesurée en mesurant l'enfoncement d'un objet tel qu'un doigt dans un matériau diélectrique sensiblement souple ou mou recouvrant les électrodes. La distance mesurée est sensiblement proportionnelle à l'enfoncement du doigt dans le matériau diélectrique. De plus, la variation de distance mesurée, qui est également sensiblement proportionnelle à l'inverse de la capacité, est multipliée par la permittivité relative du diélectrique $\varepsilon_r$ qui recouvre l'électrode, ce qui a pour résultat une augmentation de la sensibilité de la mesure de distance dès lors qu'il y a un contact entre le doigt ou l'objet et le diélectrique.

Une autre solution pour mesurer la pression peut consister à mesurer l'augmentation de la capacité due à l'augmentation de la surface d'appui d'un objet tel qu'un doigt en contact avec la surface d'un matériau diélectrique relativement rigide, lorsque la pression exercée augmente.

La présente invention permet donc de détecter, sans contact et à plusieurs centimètres voire décimètres, la position d'un doigt ou d'un objet dans l'espace, de détecter le contact du doigt ou de l'objet sur une surface de détection telle qu'un panneau de commande ou un clavier par exemple, et aussi de détecter la pression exercée par le doigt ou l'objet sur cette surface. La mesure peut être effectuée au travers d'un matériau diélectrique quelconque. Ces caractéristiques permettent de créer des interfaces de contrôle très évoluées, esthétiques et ergonomiques avec des possibilités de combinaison de commandes originales.

Il est par exemple possible, de manière non limitative, de reconnaître des signes par le mouvement des doigts, de déterminer le côté de la surface active par laquelle une main est arrivée dans le but de contrôler des actions autorisées ou non par les différentes personnes se trouvant, devant l'interface et de valider une commande majeure par un effleurement ou une pression du doigt sur le clavier.

L'utilisation d'un dispositif selon l'invention n'est bien entendu pas limitée à la détection d'un seul doigt, et des commandes issues des mouvements simultanés ou non de plusieurs doigts peuvent être envisagés.

Un dispositif selon l'invention permet de détecter la position d'un doigt au travers de tout type de diélectrique, même épais de plusieurs millimètres voire centimètres. Cet avantage permet de concevoir des dispositifs de commande avec une infinité de forme, de relief, de couleurs et de sensation de toucher permettant de les rendre plus agréables à utiliser. On peut par exemple mettre en œuvre des matériaux de qualité comme le bois, le cuir, la céramique ou tout type de polymère rigide ou souple comme du silicone. En particulier, un matériau mou comme du silicone peut donner une sensation de toucher plus agréable.

Avantageusement, le diélectrique peut être aisément remplacé pour des raisons d'hygiène ou d'esthétique notamment. Ce diélectrique peut être un matériau apte à être lavé ou stérilisé, ce qui rend le dispositif selon l'invention particulièrement adapté à la réalisation d'interfaces dans des environnements où l'hygiène est importante.

L'invention peut porter également, de manière non limitative, sur :

- un équipement de commande assurant une fonction d'interface homme-machine intégrant un dispositif capacitif de détection de mouvement selon l'invention,
- un équipement de commande destiné à être intégré à un véhicule, comprenant un dispositif capacitif de détection de mouvement selon l'invention,
- une structure murale sensible intégrant un dispositif de contrôle selon l'invention.

Suivant un autre aspect, il est proposé un procédé d'interface de commande sensible à un mouvement d'un corps ou d'un objet, mettant en œuvre un dispositif selon l'invention, comprenant :

- une excitation d'une ou plusieurs électrodes de mesure au sein d'au moins un capteur capacitif, lesdites électrodes de mesure (i) comportant une surface active orientée vers une surface de détection, ou sensiblement confondue avec ladite surface de détection et (ii) étant pourvues d'une garde en matériau conducteur à l'électricité disposée à proximité des électrodes de mesure au moins selon leur face sensiblement opposée à la surface active,
- une excitation de ladite garde étant à un potentiel électrique alternatif sensiblement identique à celui des électrodes de mesure,
- un traitement de signaux issus desdits capteurs capacitifs de façon à fournir une information de distance entre la surface active des électrodes et ledit objet,

caractérisé en ce que les électrodes de mesure présentent des surfaces actives indépendantes et sont interrogées indépendamment les unes des autres.

Dans une forme particulière de mise en œuvre, le procédé selon l'invention qui comprend une mesure d'au moins une distance entre l'objet et la surface de détection, et un traitement desdites mesures de distance pour fournir une information d'approche, est caractérisé en ce qu'il comprend en outre :

- une mesure du contact entre l'objet et la surface de détection, et
- un traitement desdites mesures de contact pour fournir une information de toucher.

Le contact peut bien entendu être un effleurement de la surface.

Suivant des aspects avantageux,

- la détection du contact entre l'objet et la surface de détection peut comprendre une comparaison de capacités mesurées avec au moins une valeur de seuil,
- le traitement des mesures de distances peut comprendre une détection de la position de l'objet dans l'espace obtenue au moins à partir des mesures de distances et de connaissances sur la disposition des capteurs capacitifs, et
- le traitement des mesures de contact peut comprendre une identification des capteurs capacitifs ayant détecté un contact entre l'objet et la surface de détection.

Le procédé selon l'invention peut comprendre en outre :

- une mesure de déplacement de la surface de détection sous l'action de l'objet,
- un traitement desdites mesures de déplacement pour fournir une information d'appui.

Avantageusement,

- le procédé selon l'invention peut comprendre en outre une étape de détermination de commandes, lesquelles commandes étant conditionnées au moins par au moins l'une quelconque des informations d'approche, de toucher et d'appui,
- au moins une commande déterminée par l'une quelconque des informations de toucher et d'appui peut être conditionnée par l'information d'approche,
- au moins une commande peut être conditionnées par l'évolution temporelle d'au moins l'une quelconque des informations d'approche, de toucher et d'appui.

Ainsi, le procédé selon l'invention permet de générer des commandes en prenant en compte jusqu'à trois niveaux d'information :

- des informations d'approche,
- des informations de toucher,
- des informations d'appui.

Bien entendu, les trois niveaux d'informations peuvent apparaître et être traitées simultanément, et ces informations peuvent inclure l'évolution temporelle des mesures ou leur historique.

De manière non limitative,

- les informations d'approche peuvent par exemple comprendre la distance, la trajectoire, l'identification d'un ou plusieurs objets à partir de leur forme. Elles peuvent être utilisées par exemple pour adapter l'interface au mode d'action en cours : activation, éclairage sélectif, adaptation de l'interface à une utilisation par un gaucher ou un droitier, par une main ou un stylet, ...
- les informations de toucher peuvent comprendre par exemple le lieu de contact, des trajectoires simples ou simultanées sur la surface, des tapotements simples ou répétés. Elles peuvent par exemple être utilisées pour valider des commandes (boutons), entrer des données (écriture), faire défiler ou zoomer un affichage, ...
- Les informations d'appui peuvent comprendre par exemple une pression en un lieu, le long d'une ou plusieurs trajectoires, des tapotements appuyés simples ou répétés, ainsi que la durée de la pression. Elles peuvent par exemple être utilisées pour effectuer des commandes proportionnelles (réglage d'une vitesse, d'une intensité), verrouiller des commandes, ...

La capacité à distinguer de manière sûre l'approche et le toucher (ou l'effleurement) est fondamentale pour des interfaces destinées à des applications requérant un certain niveau de sécurité. Cela permet de répondre à une exigence de sécurité fondamentale qui pose qu'un ordre doit être sélectionné puis validé afin d'éviter les actions intempestives.

Avantageusement, avec le procédé et le dispositif selon l'invention, la sélection peut se faire sans contact ce qui permet un gain de souplesse considérable. La détection et l'analyse de l'approche peuvent également être utilisées pour conférer au dispositif une capacité d'anticipation ou de préparation de commandes qui peut également être un facteur de sécurité.

On trouve ces exigences de sécurités notamment pour des interfaces destinées à des équipements médicaux ou à des véhicules, en particulier automobiles, pour lesquels le dispositif et le procédé selon l'invention sont particulièrement bien adaptés.

Bien entendu, le dispositif et le procédé selon l'invention ne sont pas limités à des applications liées à la sécurité. De manière générale, on peut citer à titre d'exemple non limitatifs les possibilités d'applications suivantes :

- Les applications étendues de commandes tridimensionnelles en général, de contrôle ou de commande gestuelle, connues par exemple sous des noms tels que « 3D touch panel », « 3D gesture controllers », « 3D floating vision » ;
- La domotique, avec par exemple des commandes de lumière, de climatisation, de volets, d'ouverture de porte ...
- L'électroménager, pour toute sorte de commande et de programmation d'appareils tels que des machines à laver, ...
- Les interfaces utilisateur d'équipements portables, téléphones, GPS, ...
- Les interfaces utilisateur d'équipements de bureautique et d'informatique, ordinateurs, ...
- Les interfaces de jeux électroniques à commande gestuelle ;
- Les interfaces de pilotage et de contrôle de fonctions de véhicules en général, y compris dans le domaine militaire et l'aviation ;

Suivant encore un autre aspect, un dispositif selon l'invention peut être associé avec d'autres moyens de détection et/ou d'identification sans contact pour réaliser des interfaces gestuelles globales comprenant plusieurs niveaux de détection d'un utilisateur. Il est possible par exemple :

- de localiser un utilisateur, par exemple dans un habitacle de véhicule, au moyen de capteurs capacitifs à plus grande distance de mesure, ou optiques ou à ultrasons, de telle sorte à préconfigurer une interface gestuelle selon l'invention. Par exemple, certaines fonctions peuvent être configurées différemment selon la position et le nombre d'occupants ;
- d'identifier, par exemple avec une caméra et des moyens de reconnaissances d'images, des mouvements et/ou des caractéristiques d'un utilisateur (genre, habillement, identité, morphologie ou toutes autres caractéristiques ...) de telle sorte à adapter l'interface gestuelle à ses besoins ou, pour des applications de contrôle d'accès, à son niveau d'autorisation. Ainsi, il est proposé une interface gestuelle multi-échelles intégrant un dispositif de contrôle selon l'invention, caractérisé en ce qu'elle comprend en outre des moyens d'imagerie optique comme par exemple une camera 3D.

Avantageusement, ces moyens d'imagerie optique peuvent comprendre une caméra optique.

Il est également proposé un procédé selon l'invention mettant en œuvre une interface gestuelle multi-échelles, caractérisé en ce qu'il comprend en outre :

- une étape de détection de l'objet par imagerie optique, fournissant une information d'image, et
- une étape de traitement de cette information d'image pour déterminer une ou plusieurs commandes.

Suivant un autre aspect, un dispositif selon l'invention peut avantageusement être associé à une interface vocale. Ainsi, il est proposé une interface gestuelle et vocale intégrant un dispositif de contrôle selon l'invention, caractérisé en ce qu'elle comprend des moyens de reconnaissance de commandes effectuées par la voix.

Il est également proposé un procédé selon l'invention mettant en œuvre une interface vocale, caractérisé en ce qu'il comprend en outre :

- Une étape de reconnaissance vocale, et
- Une étape de traitement de cette information vocale pour déterminer une ou plusieurs commandes.

Suivant encore un autre aspect, un dispositif selon l'invention peut avantageusement être associé à un interface gestuelle multi échelles incluant des moyens d'imagerie optique et des moyens de reconnaissance vocale pour réaliser une interface virtuelle globale comprenant ainsi plusieurs technologies. Il est alors possible par exemple d'exécuter des commandes de façons gestuelles multi-échelles et vocales.

Ainsi, il est proposé une interface gestuelle multi-échelles capacitive, optique et vocale intégrant un dispositif de contrôle selon l'invention, caractérisé en ce qu'elle comprend des moyens de reconnaissances gestuelles optiques et des moyens de commandes effectuées par la voix.

Il est également proposé un procédé selon l'invention mettant en œuvre une interface vocale, caractérisé en ce qu'il comprend en outre :

- une étape de détection de l'objet par imagerie optique, fournissant une information d'image, et
- une étape de traitement de cette information d'image pour déterminer une ou plusieurs commandes,
- une étape de reconnaissance vocale, et
- une étape de traitement de cette information vocale pour déterminer une ou plusieurs commandes.

**Description des figures et modes de réalisation**

D'autres avantages et particularités de l'invention apparaîtront à la lecture de la description détaillée de mises en œuvre et de modes de réalisation nullement limitatifs, et des dessins annexés suivants :

- la figure 1 illustre un schéma général de dispositif selon l'invention,
- la figure 2 illustre des modes d'interaction avec le dispositif selon l'invention,
- la figure 3 un mode de détection du contact entre un objet et le dispositif selon l'invention,
- la figure 4 illustre un exemple de regroupement des électrodes de mesures pour augmenter la portée du dispositif,
- la figure 5 illustre un exemple de mode de réalisation d'un dispositif selon l'invention,

- la figure 6 illustre un autre exemple de mode de réalisation d'un dispositif selon l'invention, ainsi que des exemples de modes d'interaction,
- la figure 7 illustre un premier mode de réalisation des moyens électroniques d'excitation et de traitement,
- la figure 8 illustre un second mode de réalisation des moyens électroniques d'excitation et de traitement.

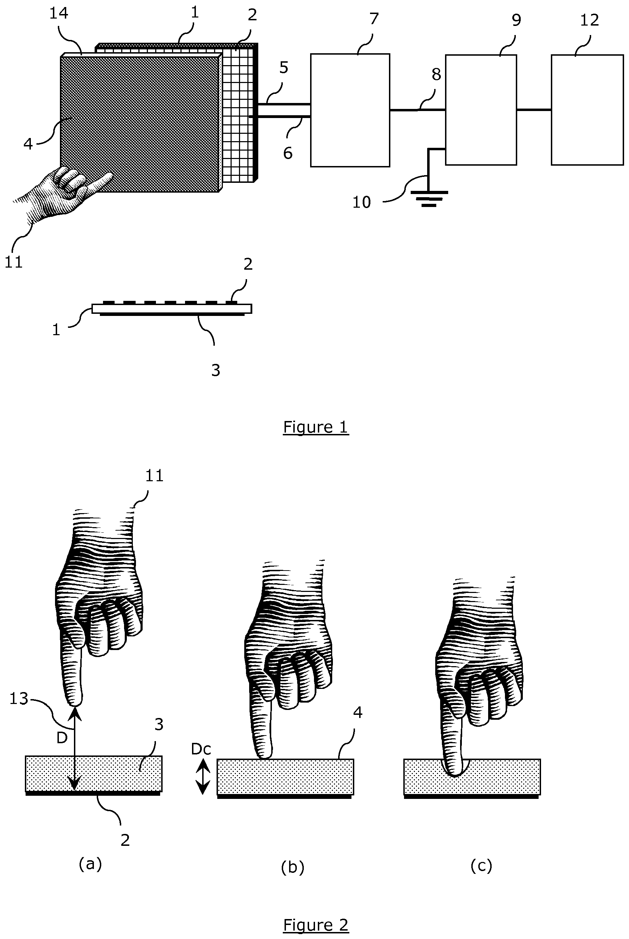

En référence à la figure 1, le dispositif selon l'invention comprend un ensemble de capteurs capacitifs réalisés sur un circuit imprimé souple double face 1. Les électrodes de mesures 2 sont gravées sur une des faces du circuit imprimé 1, tandis que la deuxième face du circuit supporte la garde 3.

Chaque électrode 2 est reliée par une piste de liaison 6 à l'électronique d'excitation et de mesure 7. Les pistes de liaisons 6 sont gravées sur la même face du circuit imprimé 1 que les électrodes. La garde 3 est également reliée à l'électronique 7, qui est flottante et référencée au potentiel de cette garde, par une liaison électrique 5. Suivant la configuration du dispositif, les liaisons électriques 5 et 6 peuvent comprendre des câbles coaxiaux.

Une plaque de matériau diélectrique 14, en silicone par exemple, est placée devant les électrodes 2, de telle sorte à être en contact avec leur surface active.

En référence à la figure 2, lorsqu'un objet 11 tel qu'une main ou un doigt s'approche du dispositif, il se crée un couplage électrique avec les électrodes capacitives 2. Les électrodes 2 en leur électronique associée 7, 9 mesurent la capacité C qui s'établit entre elles et cet objet 11, de telle sorte à en déduire la distance 13 par la relation :

$$C = \varepsilon_0 \cdot \varepsilon_r \cdot S \, / \, D,$$

où $\varepsilon_0$ est la permittivité du vide, $\varepsilon_r$ est la permittivité relative du matériau diélectrique 14 ou de l'air, qui sont à prendre en compte sur la distance où ils sont présents, S est la surface de l'électrode, de l'ordre par exemple de 1 à 2 cm$^2$ pour détecter un doigt dans de bonnes conditions, et D est la distance à mesurer.

La mesure de la distance D ou de la capacité C permet de déterminer :

- la distance de l'objet 11 lorsqu'il s'approche (figure 2a),
- le contact physique entre l'objet 11 et la surface de détection 4, qui correspond au cas où la distance D est sensiblement égale à l'épaisseur Dc du matériau diélectrique, de caractéristiques connues (figure 2b),
- et, le cas échéant, l'enfoncement de l'objet 11 dans le matériau diélectrique 14, qui correspond au cas où la distance D est sensiblement inférieure à l'épaisseur Dc, (figure 2c), et qui peut être traduit en termes de pression ou de force.

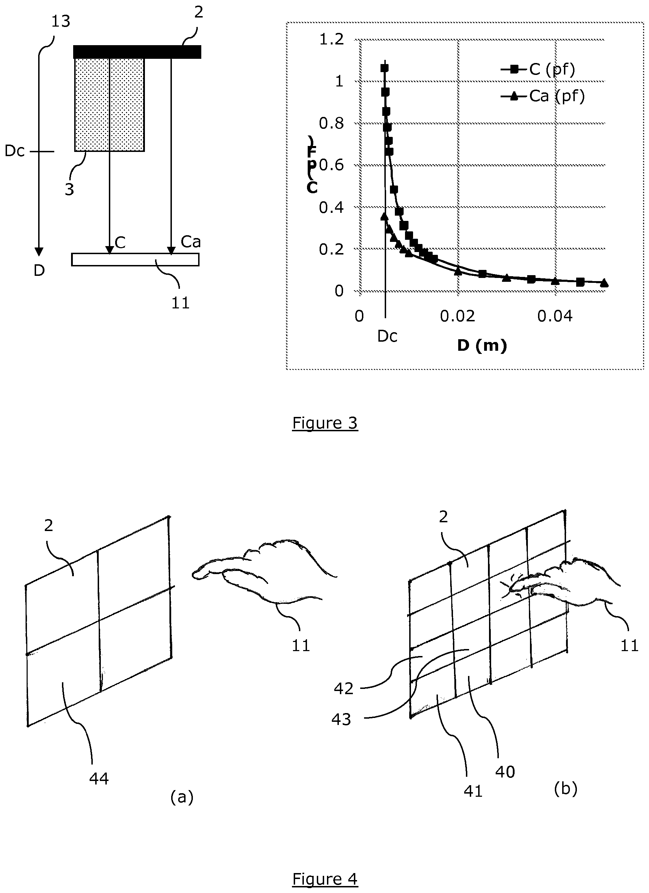

La détection du contact physique est d'un intérêt particulier pour la sûreté d'actionnement d'une commande par exemple. Cette détection est sensiblement améliorée par la présence du matériau diélectrique. La figure 3 présente un graphique comparant l'évolution de la capacité mesurée par une électrode 2 avec une surface de 2 cm$^2$, en fonction de la distance D jusqu'à un objet 11, en présence d'un matériau diélectrique 14 de permittivité relative $\varepsilon_r = 3$ et d'épaisseur Dc = 5 mm (courbe C) et en l'absence de ce matériau, respectivement (courbe Ca). On constate qu'en présence du matériau 14 (courbe C), la capacité mesurée augmente fortement lorsque l'objet 11 est à proximité immédiate de la surface du matériau.

Le contact peut ainsi être détecté avec une sensibilité d'autant plus grande que le matériau 14 a une permittivité relative élevée. Cette détection peut être avantageusement effectuée en comparant la capacité mesurée avec une ou plusieurs valeurs de seuil.

De la même manière, lorsque l'objet s'enfonce dans un matériau diélectrique souple 14 (figure 2c), sa position peut être mesurée avec une sensibilité d'autant plus grande que la permittivité relative du matériau est élevée. Cela permet avantageusement de faire des mesures de pression précises en mesurant des déplacements relativement faibles.

Une caractéristique essentielle du dispositif selon l'invention est de permettre des mesures de grande précision, aussi bien à plusieurs centimètres voire décimètres qu'à proximité immédiate des électrodes. Ce résultat est atteint grâce à la mise en œuvre d'un procédé électronique qui permet d'atteindre à la fois une grande sensibilité et une très bonne immunité aux perturbations électromagnétiques de l'environnement. La question de l'immunité aux perturbations est d'ailleurs extrêmement importante dans un environnement de dispositifs de commandes numériques.

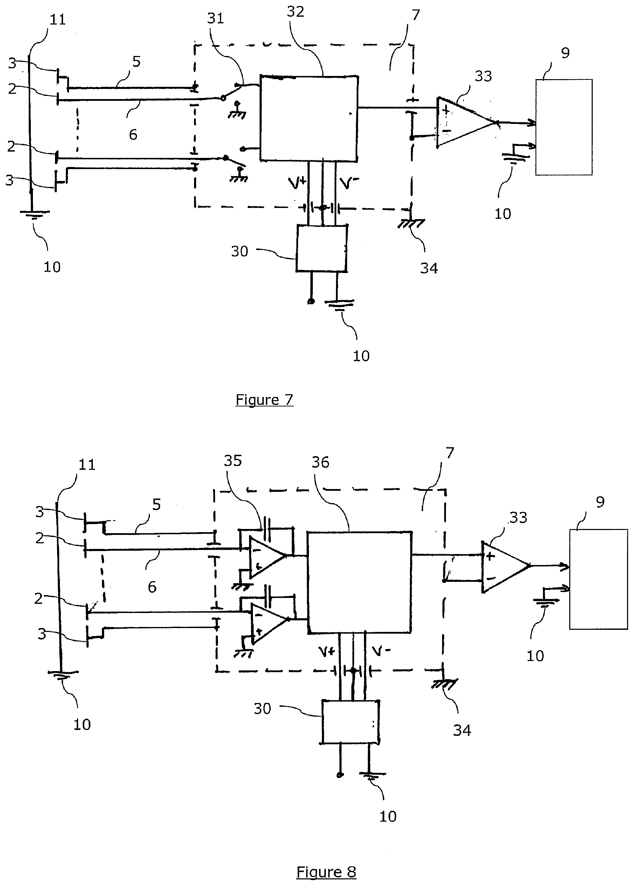

L'électronique mise en œuvre dans la présente invention est basée sur le procédé de mesure à pont flottant décrite dans le document FR 2,756,048. La figure 7 présente un premier exemple de mode de réalisation de l'électronique. La capacité de l'électrode 2 est mesurée par un capacimètre 7 référencé au potentiel 34 de garde 3, de manière totalement flottante par rapport à la masse générale 10. La garde 3 et les électrodes 2 sont excitées à une tension alternative à fréquence fixe au moyen du circuit 7, de telle sorte à permettre une démodulation synchrone des mesures. L'électronique flottante 7 est alimentée par exemple par un convertisseur de tensions continues DC/DC 30. Le signal de mesure après démodulation est transféré au circuit 9 référencé à la masse générale par un amplificateur différentiel 33 pour pouvoir être transmis aux moyens de calcul. Un multiplexeur 31 permet d'interroger séquentiellement les électrodes 2, tandis que les électrodes inactives sont maintenues au potentiel de garde 34.

La figure 8 présente un second exemple de mode de réalisation de l'électronique. Il diffère de celui de la figure 7 en ce que toutes les électrodes 2 ont leur propre électronique de détection 35 et peuvent être lues simultanément.

Suivent des modes de réalisation particuliers,

- le convertisseur DC/DC 30 peut être remplacé par une alimentation moins onéreuse référencée à la masse générale 10, et couplée au circuit flottant 7 par des « selfs de choc » ou bobines d'arrêt,
- l'amplificateur différentiel de sortie 33 peut être remplacé par des optocoupleurs ou des selfs de choc.

L'électronique mise en œuvre permet de mesurer des capacités de l'ordre de 0.001 pF (picofarads) jusqu'à quelques picofarads, avec une précision de l'ordre de 0.001 pF.

En prenant l'exemple de la mesure de position d'un doigt placé à 50 mm d'une électrode de surface d'environ 2 cm$^2$, on peut estimer que la capacité mesurée est d'environ 0.035 pF. Dans ces condition et à cette distance la sensibilité de l'électronique est de 0.7 pF/m et la précision de la mesure de position est inférieure à $10^{-3} / 0,7 = 1,4$ mm.

Lorsque le doigt s'éloigne encore plus, la sensibilité décroit rapidement car les lignes de champs commencent à s'évaser sur les côtes. En effet, la garde entourant l'électrode sélectionnée représente au maximum la totalité de la surface de détection 4. Pour un panneau de dimension classique (100 à 200 mm de côté), les lignes de champ d'une électrode de 2 cm$^2$ s'évasent au delà d'une distance d'environ 50 mm. Avec un panneau de surface plus importante, on peut même en théorie détecter un doigt à plus de 100 mm mais la résolution latérale sera considérablement dégradée.

Une main peut être très facilement détectée à plus de 300 mm si on regroupe les électrodes pour obtenir par exemple une surface d'électrode de 2500 mm$^2$. A cette distance, la capacité mesurée est d'environ 0.073 pF.

Ces performances peuvent être atteintes en utilisant la technique du pont flottant car l'électronique ne mesure que la capacité entre l'électrode 2 et l'objet 11. Dans les dispositifs de l'art antérieur tels que dans US 6,847,354, les capacités parasites générées par le circuit de mesure et de création de la garde restent supérieures à 1 pF et la stabilité de ce décalage parasite, source de bruit, est de l'ordre de quelques dizaines à quelques centaines de femtofarads.

La technique du pont flottant mise en œuvre en utilisant une excitation d'un signal alternatif avec modulation et démodulation d'amplitude permet aussi de garantir une très bonne réjection de la variation des impédances des matériaux diélectriques 14 entourant et recouvrant les électrodes 2.

De plus, le pont flottant a la particularité de mesurer directement l'inverse de la capacité entre l'électrode 2 et l'objet 11, ce qui permet d'obtenir un signal linéairement proportionnel avec la distance à mesurer 13. Cet avantage est fondamental car, à grande distance, la capacité varie très peu avec la distance (selon une loi hyperbolique), et les décalages naturels de l'électronique et des moyens de numérisation du signal dérivent plus que la capacité à mesurer.

En référence à la figure 4, les électrodes capacitives peuvent être regroupées électroniquement, par exemple au moyen du multiplexeur 31, de telle sorte à constituer des électrodes de surface supérieures capables de détecter des objets à plus grande distance. Dans l'exemple de la figure 4, l'électrode 44 est constituée en regroupant les électrodes 40, 41, 42, 43. Par exemple, lorsque le dispositif ne détecte pas d'objets à proximité, il se place dans un mode de détection à grande distance (figure 4a). Lorsqu'un objet approche de l'étendue de mesure des électrodes individuelles, le dispositif commute dans le mode le plus résolu latéralement (figure 4b) pour détecter les détails des objets. Bien entendu, la reconfiguration peut être plus complexe, et dépendre localement de ce qui est détecté par les différentes zones.

Suivant des modes de réalisation particuliers, un dispositif selon l'invention peut comprendre des dispositions d'électrodes très différentes d'une matrice carrée placée sur une surface uniforme.

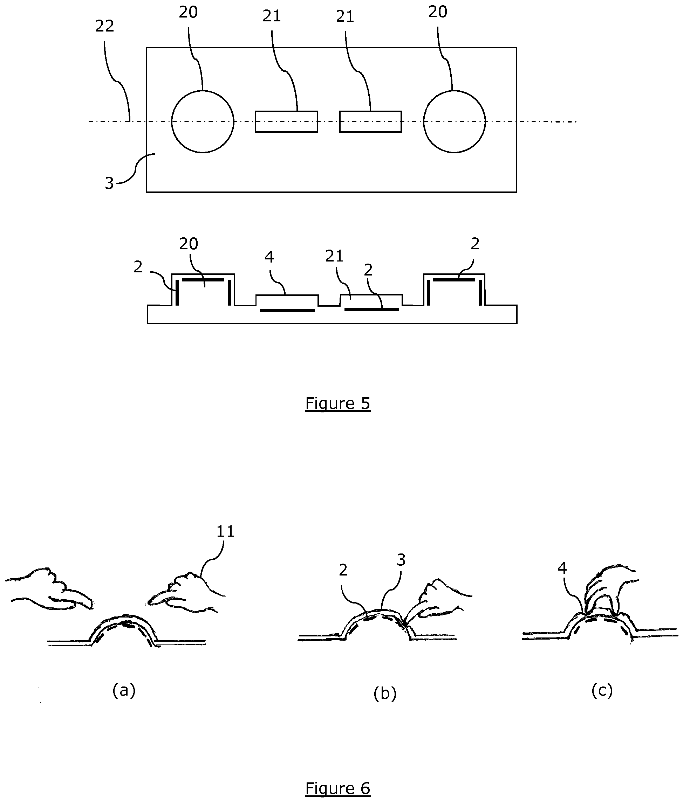

Par exemple, à la figure 5, les électrodes sont placées sous un matériau diélectrique 14 dont la surface de détection 4 imite la forme de commutateurs électromécaniques tels que des boutons tournants 20 et des boutons poussoir 21. Les « pseudo boutons » sont pourvus d'électrodes 2 permettant de détecter l'approche puis l'action d'un utilisateur.

La figure 6 illustre une interface constituée d'électrodes capacitives disposées sous une surface de détection en matériau diélectrique souple, de forme hémisphérique. Une telle interface peut par exemple aisément détecter par quel côté une main approche, s'il s'agit d'une main droite ou gauche, ou plusieurs mains (figure 6a), pour interpréter une commande effectuée avec un doigt (figure 6b) ou plusieurs doigts (figure 6c).

Suivant des modes de réalisation particuliers, les électrodes capacitives et la garde peuvent être réalisées au moyen de matériaux conducteurs transparents tel que de l'ITO (oxyde d'indium dopé à l'étain), de telle sorte que le dispositif soit sensiblement transparent et puisse être placé sur un écran de visualisation par exemple.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif d'interface de commande sensible à un mouvement d'un corps ou d'un objet, comprenant :

une surface de détection (4),
au moins un capteur capacitif, lequel ou lesquels capteurs comprend chacun une électrode de mesure (2) comportant une surface active orientée vers la surface de détection (4), ou sensiblement confondue avec ladite surface de détection,
des moyens électroniques d'excitation et de traitement (7, 9, 12) pour exciter les électrodes de mesure (2) et traiter les signaux issus desdits capteurs capacitifs, aptes à fournir une information de distance (13) entre la surface active des électrodes (2) et ledit objet (11),
dans lequel les surfaces actives des électrodes de mesure (2) sont indépendantes les unes des autres, et
dans lequel les moyens électroniques d'excitation et de traitement (7, 9, 12) sont en outre agencés pour interroger lesdites électrodes de mesure (2) indépendamment les unes des autres,
dans lequel lesdits moyens électroniques d'excitation et de traitement (7, 9, 12) sont en outre aptes à :

détecter et identifier un mouvement relatif du corps ou de l'objet (11) par rapport à la surface active des électrodes de mesure (2), et
détecter un contact dudit corps ou dudit objet avec ladite surface de détection (4),

**caractérisé en ce que** le dispositif d'interface de commande comprend une garde en matériau conducteur à l'électricité (3) disposée à proximité des électrodes de mesure (2) au moins selon leur face sensiblement opposée à la surface active, laquelle garde (3) est excitée à un potentiel électrique alternatif sensiblement identique à celui des électrodes de mesure (2).

2. Dispositif selon la revendication 1, dans lequel les moyens électroniques d'excitation et de traitement sont au moins pour partie (7) référencés au potentiel électrique de la garde.

3. Dispositif selon l'une quelconque des revendications précédentes, dans lequel les moyens électroniques d'excitation et de traitement (7, 9) comprennent des moyens de scrutation (31) permettant de lire séquentiellement les signaux de mesure issus des capteurs capacitifs, les électrodes qui ne sont pas en cours de scrutation étant reliées au potentiel de la garde (3).

4. Dispositif selon l'une quelconque des revendications précédentes, dans lequel les moyens électroniques d'excitation et de traitement comprennent des moyens permettant de regrouper électriquement des électrodes de mesure (40, 41, 42, 43), de telle sorte que lesdites électrodes regroupées constituent une électrode de mesure unique (44).

5. Dispositif selon l'une quelconque des revendications précédentes, dans lequel il comprend en outre un matériau diélectrique (14) disposé du côté de la surface active des électrodes de mesure (2), la surface dudit matériau diélectrique opposée aux électrodes constituant la surface de détection (4).

6. Dispositif selon la revendication 4, dans lequel le matériau diélectrique (14) est disposé de telle sorte à être sensiblement en contact avec la surface active des électrodes (2).

7. Dispositif selon l'une des revendications 4 ou 5, dans lequel le matériau diélectrique (14) comprend un matériau souple permettant à la surface de détection (4) de se déformer sensiblement en direction des électrodes de mesure par amincissement local du matériau sous l'action d'une force d'appui.

8. Dispositif selon la revendication 5, dans lequel le matériau diélectrique (14) comprend une plaque sensiblement rigide, apte à se déplacer vers des électrodes de mesure sous l'action d'une force d'appui, selon une inclinaison dépendant du point d'application de ladite force d'appui.

9. Dispositif selon l'une quelconque des revendications précédentes, dans lequel la surface de détection (4) présente des formes en relief matérialisant des commandes (20, 21).

10. Equipement de commande assurant une fonction d'interface homme-machine intégrant un dispositif d'interface de commande selon l'une des revendications précédentes.

11. Interface gestuelle multi-échelles intégrant un dispositif d'interface de commande selon l'une quelconque des revendications 1 à 9, dans laquelle elle comprend en outre des moyens d'imagerie optique.

12. Interface gestuelle multi-échelles intégrant un dispositif d'interface de commande selon l'une quelconque des revendications 1 à 9, dans laquelle elle comprend en outre des moyens de reconnaissance vocale.

13. Interface gestuelle multi-échelles intégrant un dispositif d'interface de commande selon l'une quelconque des revendications 1 à 9, dans laquelle elle comprend en outre des moyens d'imagerie optique et des moyens de reconnaissance vocale.

14. Procédé d'interface de commande sensible à un mouvement d'un corps ou d'un objet, mettant en œuvre un dispositif selon l'une quelconque des revendications 1 à 9, comprenant :

une excitation d'une ou plusieurs électrodes de mesure (2) au sein d'au moins un capteur capacitif, lesdites électrodes de mesure comportant une surface active orientée vers une surface de détection (4), ou sensiblement confondue avec ladite surface de détection, présentant des surfaces actives indépendantes et étant interrogées indépendamment les unes des autres, un traitement des signaux issus des capteurs capacitifs de façon à fournir une information de distance (13) entre la surface active des électrodes (2) et ledit objet (11), un traitement desdits signaux issus des capteurs capacitifs de façon à détecter un contact dudit corps ou dudit objet (11) avec ladite surface de détection (4) et fournir une mesure de contact, **caractérisé en ce qu'**il comprend en outre: une excitation d'une garde en matériau conducteur à l'électricité (3), disposée à proximité des électrodes de mesure (2) au moins selon leur face sensiblement opposée à la surface active, à un potentiel électrique alternatif sensiblement identique à celui des électrodes de mesure (2).

15. Procédé selon la revendication 14, dans lequel il comprend en outre :

un traitement des informations de distance (13) pour fournir une information d'approche, et un traitement des mesures de contact pour fournir une information de toucher.

16. Procédé selon la revendication 15, dans lequel:

le traitement des mesures de distances comprend une détection de la position de l'objet (11) dans l'espace obtenue au moins à partir de mesures de distances et de connaissances sur la disposition des capteurs capacitifs (2), et que le traitement des mesures de contact comprend une identification des capteurs capacitifs (2) ayant détecté un contact entre l'objet (11) et la surface de détection (4).

17. Procédé selon l'une des revendications 15 ou 16, dans lequel il comprend en outre :

une mesure de déplacement de la surface de détection (4) sous l'action de l'objet (11), et un traitement desdites mesures de déplacement pour fournir une information d'appui.

**18.** Procédé selon l'une quelconque des revendications 15 à 17, dans lequel il comprend en outre une étape de détermination de commandes, lesquelles commandes sont conditionnées au moins par au moins l'une quelconque des informations d'approche, de toucher et d'appui.

**19.** Procédé selon la revendication 18, dans lequel au moins une commande déterminée par l'une quelconque des informations de toucher et d'appui est conditionnée par l'information d'approche.

**20.** Procédé selon l'une des revendications 18 ou 19, dans lequel au moins une commande est conditionnée par l'évolution temporelle d'au moins l'une quelconque des informations d'approche, de toucher et d'appui.

**21.** Procédé selon l'une des revendications 15 à 20, mettant en œuvre une interface gestuelle multi-échelles selon la revendication 11, dans lequel il comprend en outre :

une étape de détection de l'objet par imagerie optique, fournissant une information d'image, et une étape de traitement de cette information d'image pour déterminer une ou plusieurs commandes.

**22.** Procédé selon l'une des revendications 15 à 20, mettant en œuvre une interface gestuelle selon la revendication 12, dans lequel il comprend en outre :

une étape de reconnaissance vocale, et une étape de traitement de cette information d'image pour déterminer une ou plusieurs commandes.

**23.** Procédé selon l'une des revendications 15 à 20, mettant en œuvre une interface gestuelle selon la revendication 13, dans lequel il comprend en outre :

une étape de détection de l'objet par imagerie optique, fournissant une information d'image, une étape de traitement de ces informations d'image pour déterminer une ou plusieurs commandes, une étape de reconnaissance vocale, et une étape de traitement de cette information vocale pour déterminer une ou plusieurs commandes.

**Patentansprüche**

**1.** Steuerschnittstellen-Vorrichtung, die gegenüber einer Bewegung eines Körpers oder eines Objekts empfindlich ist, umfassend:

eine Detektionsoberfläche (4), wenigstens einen kapazitativen Geber, wobei der oder die Geber jeder eine Messelektrode (2) umfasst/umfassen, die eine aktive Oberfläche aufweist, die zu der Detektionsoberfläche (4) hin gerichtet ist oder mit der Detektionsoberfläche im Wesentlichen zusammenfällt, elektronische Anregungs- und Verarbeitungsmittel (7, 9, 12), um die Messelektroden (2) anzuregen und um die von den kapazitativen Gebern stammenden Signale zu verarbeiten, die imstande sind, eine Information über den Abstand (13) zwischen der aktiven Oberfläche der Elektroden (2) und dem Objekt (11) auszugeben, wobei die aktiven Oberflächen der Messelektroden (2) voneinander unabhängig sind und wobei die elektronischen Anregungs- und Verarbeitungsmittel (7, 9, 12) ferner eingerichtet sind, um die Messelektroden (2) unabhängig voneinander abzufragen, wobei die elektronischen Anregungs- und Verarbeitungsmittel (7, 9, 12) ferner dazu imstande sind:

eine relative Bewegung des Körpers oder des Objekts (11) gegenüber der aktiven Oberfläche der Messelektroden (2) zu detektieren und zu identifizieren, und einen Kontakt des Körpers oder des Objekts mit der Detektionsoberfläche (4) zu detektieren,

**dadurch gekennzeichnet, dass** die Steuerschnittstellen-Vorrichtung einen Wächter aus elektrisch leitfähigem Material (3) umfasst, der in der Nähe der Messelektroden (2) wenigstens gemäß ihrer der aktiven Oberfläche im Wesentlichen gegenüberliegenden Fläche angeordnet ist, wobei der Wächter (3) mit einem wechselnden elektrischen Potential angeregt wird, das mit dem der Messelektroden (2) im Wesentlichen identisch ist.

**2.** Vorrichtung nach Anspruch 1, wobei die elektronischen Anregungs- und Verarbeitungsmittel wenigstens zum Teil (7) auf das elektrische Potential des Wächters referenziert sind.

**3.** Vorrichtung nach einem der vorhergehenden Ansprüche, wobei die elektronischen Anregungs- und Verarbeitungsmittel (7, 9) Abfragemittel (31) umfassen, die das sequentielle Lesen der von den kapazitativen Gebern stammenden Signale gestatten, wobei die Elektroden, die sich gerade nicht in Abfrage befinden, mit dem Potential des Wächters (3) verbunden sind.

**4.** Vorrichtung nach einem der vorhergehenden Ansprüche, wobei die elektronischen Anregungs- und Verarbeitungsmittel Mittel umfassen, die das elektrische Gruppieren der Messelektroden (40, 41, 42, 43) gestatten, in der Form, dass die gruppierten Elektroden eine einzige Messelektrode (44) bilden.

**5.** Vorrichtung nach einem der vorhergehenden Ansprüche, wobei sie ferner ein dielektrisches Material (14) umfasst, das auf der Seite der aktiven Oberfläche der Messelektroden (2) angeordnet ist, wobei die den Elektroden gegenüberliegende Oberfläche des dielektrischen Materials die Detektionsoberfläche (4) bildet.

**6.** Vorrichtung nach Anspruch 4, wobei das dielektrische Material (14) so angeordnet ist, dass es mit der aktiven Oberfläche der Elektroden (2) im Wesentlichen in Kontakt ist.

**7.** Vorrichtung nach einem der Ansprüche 4 oder 5, wobei das dielektrische Material (14) ein biegsames Material umfasst, das der Detektionsoberfläche (4) gestattet, sich im Wesentlichen in Richtung der Messelektroden durch lokale Verdünnung des Materials unter der Einwirkung einer Andrückkraft zu verformen.

**8.** Vorrichtung nach Anspruch 5, wobei das dielektrische Material (14) eine im Wesentlichen steife Platte umfasst, die imstande ist, sich zu den Messelektroden hin unter der Einwirkung einer Andrückkraft zu bewegen, gemäß einer Neigung, die vom Aufbringungspunkt der Andrückkraft abhängt.

**9.** Vorrichtung nach einem der vorhergehenden Ansprüche, wobei die Detektionsoberfläche (4) erhabene Formen aufweist, die Bedienelemente (20, 21) bilden.

**10.** Steuergerät zur Sicherstellung einer Mensch-Maschinen-Schnittstellen-Funktion, das eine Steuerschnittstellen-Vorrichtung nach einem der vorhergehenden Ansprüche integriert.

**11.** Multiskalen-Gestenschnittstelle, die eine Steuerschnittstellen-Vorrichtung nach einem der vorhergehenden Ansprüche 1 bis 9 integriert, wobei sie ferner optische Bildgebungsmittel umfasst.

**12.** Multiskalen-Gestenschnittstelle, die eine Steuerschnittstellen-Vorrichtung nach einem der vorhergehenden Ansprüche 1 bis 9 integriert, wobei sie ferner Spracherkennungsmittel umfasst.

**13.** Multiskalen-Gestenschnittstelle, die eine Steuerschnittstellen-Vorrichtung nach einem der vorhergehenden Ansprüche 1 bis 9 integriert, wobei sie ferner optische Bildgebungsmittel und Spracherkennungsmittel umfasst.

**14.** Steuerschnittstellenverfahren, das gegenüber einer Bewegung eines Körpers oder eines Objekts empfindlich ist und eine Vorrichtung nach einem der Ansprüche 1 bis 9 verwendet, umfassend:

eine Anregung einer oder mehrerer Messelektroden (2) in wenigstens einem kapazitativen Geber, wobei die Messelektroden eine aktive Oberfläche aufweisen, die zu einer Detektionsoberfläche (4) hin gerichtet ist oder mit der Detektionsoberfläche im Wesentlichen zusammenfällt, unabhängige aktive Oberflächen aufweisen und unabhängig voneinander abgefragt werden, eine Verarbeitung der von den kapazitativen Gebern stammenden Signale in der Form, dass eine Information über den Abstand (13) zwischen der aktiven Oberfläche der Elektroden (2) und dem Objekt (11) ausgegeben wird, eine Verarbeitung der von den kapazitativen Gebern stammenden Signale in der Form, dass ein Kontakt des Körpers oder des Objekts (11) mit der Detektionsoberfläche (4) und eine Kontaktmessung bereitgestellt wird, **dadurch gekennzeichnet, dass** es ferner umfasst: eine Anregung eines Wächters aus elektrisch leitfähigem Material (3), der in der Nähe der Messelektroden (2) wenigstens gemäß ihrer der aktiven Oberfläche im Wesentlichen gegenüberliegenden Fläche angeordnet ist, mit einem wechselnden elektrischen Potential, das mit dem der Messelektroden (2) im Wesentlichen identisch ist.

**15.** Verfahren nach Anspruch 14, wobei es ferner umfasst:

eine Verarbeitung der Informationen über den Abstand (13), um eine Annäherungsinformation auszugeben, und eine Verarbeitung der Kontaktmessungen, um eine Berührungsinformation auszugeben.

**16.** Verfahren nach Anspruch 15, bei dem die Verarbeitung der Abstandsmessungen eine Detektion der Position des Objekts (11) im Raum umfasst, die wenigstens ausgehend von Abstandmessungen und von Kenntnissen über die Anordnung der kapazitativen Sensoren (2) erhalten wurde, und dass die Verarbeitung der Kontaktmessungen eine Identifizierung der kapazitativen Sensoren (2) umfasst, die einen Kontakt zwischen dem Objekt (11) und der Detektionsoberfläche (4) detektiert haben.

**17.** Verfahren nach Anspruch 15 oder 16, wobei es ferner umfasst:

eine Messung der Bewegung der Detektionsoberfläche (4) unter der Einwirkung des Objekts (11) und
eine Verarbeitung der Bewegungsmessungen, um eine Andrückinformation auszugeben.

18. Verfahren nach einem der Ansprüche 15 bis 17, wobei es ferner einen Schritt der Bestimmung von Steuerungen umfasst, wobei die Steuerungen durch wenigstens eine aus den Annäherungs-, Berührungs- und Andrückinformationen bedingt sind.

19. Verfahren nach Anspruch 18, bei dem wenigstens eine Steuerung, die durch eine aus den Berührungs- und Andrückinformationen bestimmt wurde, durch die Annäherungsinformation bedingt ist.

20. Verfahren nach einem der Ansprüche 18 oder 19, bei dem wenigstens eine Steuerung durch die zeitliche Entwicklung wenigstens einer aus den Annäherungs-, Berührungs- und Andrückinformationen bedingt ist.

21. Verfahren nach einem der Ansprüche 15 bis 20, das eine Multiskalen-Gestenschnittstelle nach Anspruch 11 verwendet, wobei es ferner umfasst:

einen Schritt der Detektion des Objekts durch optische Bildgebung, wobei eine Bildinformation ausgegeben wird, und
einen Schritt der Verarbeitung dieser Bildinformation, um eine oder mehrere Steuerungen zu bestimmen.

22. Verfahren nach einem der Ansprüche 15 bis 20, das eine Gestenschnittstelle nach Anspruch 12 verwendet, wobei es ferner umfasst:

einen Schritt der Spracherkennung und
einen Schritt der Verarbeitung dieser Bildinformation, um eine oder mehrere Steuerungen zu bestimmen.

23. Verfahren nach einem der Ansprüche 15 bis 20, das eine Gestenschnittstelle nach Anspruch 13 verwendet, wobei es ferner umfasst:

einen Schritt der Detektion des Objekts durch optische Bildgebung, wobei eine Bildinformation ausgegeben wird,
einen Schritt der Verarbeitung dieser Bildinformationen, um eine oder mehrere Steuerungen zu bestimmen,
einen Schritt der Spracherkennung und
einen Schritt der Verarbeitung dieser Sprachinformation, um eine oder mehrere Steuerungen zu bestimmen.

**Claims**

1. Interface device responsive to a movement of a body or an object, comprising:

a detection surface (4),
at least one capacitive sensor, wherein the sensor or the sensors each comprise a measurement electrode (2) comprising an active surface oriented toward the detection surface (4) or substantially coinciding with the detection surface,
electronic stimulation and treatment means (7, 9, 12) to stimulate the measurement electrodes (2) and to treat the signals sent by the capacitive sensors configured to provide an information regarding a distance (13) between the active surface of the electrodes (2) and the object (11),
wherein the active surfaces of the measurement electrodes (2) are independent of one another, and
wherein the electronic stimulation and treatment means (7, 9, 12) are further configured to sample the measurement electrodes (2) independently of one another,
**characterized in that** the electronic stimulation and treatment means (7, 9,12) are further configured to:

detect and identify a relative movement of the body or of the object (11) with regard to the active surface of the measurement electrodes (2) and
detect a contact of the body or of the object with the detection surface (4)

**characterized in that** interface device comprises a guard (3) made of electrically conductive material arranged in proximity to the measurement electrodes (2) at least along their surface, which is substantially opposite to the active surface, wherein the guard (3) is stimulated to an alternating electric potential substantially identical to that of the measurement electrodes (2).

2. The device according to claim 1, wherein the electronic stimulation and treatment means are at least partially (7) referenced to the electric potential of the guard.

3. The device according to one of the preceding claims, wherein the electronic stimulation and treatment means (7, 9) comprise scanning means (31) allowing to sequentially read the measurement signals sent by the capacitive sensors, wherein the electrodes which are not currently being scanned are connected to the potential of the guard (3).

4. The device according to any one of the preceding claims, wherein the electronic stimulation and treatment means comprise means allowing to electrically regroup measurement electrodes (40, 41, 42, 43) such that the regrouped electrodes form a single measurement electrode (44).

5. The device according to any one of the preceding claims, wherein it further comprises a dielectric material (14) arranged on the side of the active surface of the measurement electrodes (2), wherein the surface of the dielectric material is opposite of the electrodes forming the detection surface (4).

6. The device according to claim 4, wherein the dielectric material (14) is arranged such that it is substantially in contact with the active surface of the electrodes (2).

7. The device according to claims 4 or 5, wherein the dielectric material (14) comprises a flexible material allowing the detection surface (4) to substantially bend in a direction of the measurement electrodes due to local thinning of the material when pressure is applied.

8. The device according to claim 5, wherein the dielectric material (14) comprises a substantially rigid plate configured to move toward the measurement electrodes when pressure is applied according to an inclination which depends on the point of application of the pressure.

9. The device according to any one of the preceding claims, wherein the detection surface (4) presents elevated shapes, which realize commands (20, 21).

10. Command equipment providing a human machine interface function integrating a command interface device according to any one of the preceding claims.

11. Multi-scale gesture interface integrating a command interface device according to any one of claims 1 to 9, wherein it further comprises means for optical imaging.

12. Multi-scale gesture interface integrating a command interface device according to any one of claims 1 to 9, wherein it further comprises voice recognition means.

13. Multi-scale gesture interface integrating a command interface device according to any one of claims 1 to 9 wherein it further comprises optical imaging means and voice recognition means.

14. Command interface method responsive to a movement of a body or an object implementing a device according to any one of claims 1 to 9, comprising:

stimulating one or more measurement electrodes (2) within a capacitive sensor, wherein the measurement electrodes comprise an active surface oriented towards a detection surface (4) or substantially coinciding with the detection surface, present independent active surfaces and are sampled independently from one another, treating signals sent from the capacitive sensors to provide an information regarding a distance (13) between the active surface of the electrodes (2) and the object (11),
wherein it further comprises treating the signals output from the capacitive sensors to detect a contact of the body or the object (11) with the detection surface (4) and to provide a contact measurement
**characterized in that** it additionally comprises stimulating a guard (3) made of an electrically conductive material arranged in proximity to the measurement electrodes (2) at least along their surfaces which are substantially opposite to the active surface, to an alternating electric potential substantially identical to that of the measurement electrodes (2).

15. The method according to claim 14, wherein it further comprises:

treating the information regarding the distance (13) to provide approach information and treating the contact measurements to provide touch information.

16. The method according to claim 15, wherein:

treating the measurements regarding the distance comprises detecting the position of the object (11) in space obtained at least from the distance measurements and from knowing the arrangement of the capacitive sensors (2) and in that
treating the contact measurements comprises an identification of capacitive sensors (2) which detected a contact between the object (11) and the detection surface (4).

17. The method according to one of claims 15 or 16, wherein it further comprises:

measuring a movement of the detection surface (4) due to the action of the object (11), treating the movement measurement to provide a pressure information.

18. The method according to anyone of claims 15 to 17, wherein it further comprises a step of determining commands, wherein the commands are conditioned by at least one of the approach information, the touch information and the pressure information.

19. The method according to claim 18, wherein at least one command determined by any one of the touch information and the pressure information is conditioned by the approach information.

20. The method according to one of claims 18 or 19, wherein at least one command is conditioned by the changes over time of at least one of the approach information, the touch information and the pressure information.

21. The method according to one of claims 15 to 20, implementing a multi-scale gesture interface according to claim 11, wherein it further comprises:

> a step of detecting the object by optical imaging providing an image information and
> a step of treating this image information to determine one or more commands.

22. The method according to one of claims 15 to 20 implementing a gesture interface according to claim 12, wherein it further comprises:

> a step of recognizing a voice, and
> a step of treating the image information to determine one or more commands.

23. The method according to one of claims 15 to 20 implementing a gesture interface according to claim 13, wherein it further comprises:

> a step of detecting the object by optical imaging providing image information,
> a step of treating this imaging information to determine one or more commands,
> a step of recognizing a voice, and
> a step of treating this voice information to determine one or more commands.

Figure 1

Figure 2

Figure 3

(a)

(b)

Figure 4

Figure 5

(a)          (b)          (c)

Figure 6

Figure 7

Figure 8

**EP 2 462 498 B1**

## RÉFÉRENCES CITÉES DANS LA DESCRIPTION

**Documents brevets cités dans la description**

- US 6847354 B
- FR 2884349
- US 2006097991 A1
- US 2009009485 A1
- FR 2756048